# DEMANDE DE BREVET EUROPEEN

(11) **EP 4 621 258 A1**
(43) Date de publication de la demande: **24.09.2025**
(21) Numéro de dépôt: 25163172.7
(22) Date de dépôt: 12.03.2025
(51) Int. Cl.: F16D 66/02, F16D 65/12

(54) **DISQUE DE FREIN COMPRENANT UN TÉMOIN D'USURE**

(30) Priorité: 22.03.2024 FR 2402903
(71) Demandeur: Renault s.a.s, 92100 Boulogne Billancourt (FR)
(72) Inventeur: ARNOUX, Ismael, 72000 Le Mans (FR); BRUNET, Roland, 72000 Le Mans (FR)

(57) **Abrégé**

Disque de frein comprenant une première face (2) et une deuxième (3) face opposée à la première face (2), chacune des première et deuxième faces (2, 3) comprenant un substrat et une surface externe (2a, 3a) du substrat (2a, 3a), au moins l'une des surfaces externes (2a, 3a) comportant une zone de frottement (4) d'une plaquette de frein et au moins une zone exempte de frottement (5, 6) de la plaquette de frein,

En outre, le disque de frein (1) comprend au moins un témoin d'usure (10) comprenant un évidement visible à l'œil nu et comportant une première portion (12) s'étendant sur la zone de frottement (4) de ladite au moins une surface externe (2a, 3a) et une deuxième portion (13) prolongeant la première portion (12) et s'étendant sur la zone exempte de frottement (5, 6).

## Description

La présente invention se rapporte, de manière générale, aux disques de freins possédant une couche externe de dureté élevée, notamment pour véhicule automobile, et, plus précisément, au contrôle de l'usure d'un tel disque de frein.

En particulier, l'invention concerne un disque de frein comportant un témoin d'usure, un véhicule automobile comprenant un tel disque de frein ainsi qu'un procédé de fabrication d'un tel disque de frein.

Dans un véhicule automobile, la durée de vie des disques de frein est liée à un niveau d'usure du disque de frein.

Sur les disques en fonte graphite lamellaire classiquement utilisés, le niveau d'usure est facilement mesurable. La valeur d'usure maximale, ou côte d'usure, est indiquée par le constructeur. Lorsque l'épaisseur minimale du disque de frein est atteinte, celui-ci est en fin de vie et doit être remplacé.

Par ailleurs, la friction réalisée entre les plaquettes de frein et les pistes de friction du disque de frein lors du freinage ainsi que l'usure du disque de frein entraînent la libération de particules polluantes dans l'atmosphère.

Les émissions de particules de moins de 10 µm (PM10), dites particules fines, sont particulièrement dangereuses pour les voies respiratoires des populations.

Par conséquent, il est nécessaire de limiter les émissions de particules fines au freinage des véhicules automobiles de particuliers et utilitaires.

Pour répondre à cette contrainte, il existe des disques de frein comportant un revêtement de surface visant notamment à augmenter la dureté de la surface de frottement en contact avec les plaquettes de frein.

Cependant, de tels disques de frein comportant un revêtement de dureté élevée sur les zones de frottement par les plaquettes s'usent très peu par effet tribologique et cette faible usure n'est pas mesurable avec les outils communément utilisés tel qu'un pied à coulisse, des palpeurs ou encore un réglet. Par conséquent, il devient impossible de juger si un tel disque de frein est en fin de vie et s'il est à changer.

L'invention a donc pour but de remédier à ces inconvénients et de proposer un disque de frein, notamment un disque de frein comportant un revêtement de dureté élevée, comportant un témoin d'usure permettant d'apprécier le niveau d'usure des pistes de friction sans instrument de mesure.

Il est donc proposé un disque de frein comprenant une première face et une deuxième face opposée à la première face, chacune des première et deuxième faces comportant une zone de frottement d'une plaquette de frein et au moins une zone exempte de frottement de la plaquette de frein,

En outre, au moins l'une des première et deuxième faces comprend au moins un témoin d'usure comprenant un évidement visible à l'œil nu et comportant une première portion s'étendant sur la zone de frottement et une deuxième portion prolongeant la première portion et s'étendant sur la zone exempte de frottement.

De préférence, la première face et la deuxième face du témoin d'usure comprennent chacune au moins un témoin d'usure.

Dans un mode de réalisation, au moins l'une des première et deuxième faces comporte une surface externe d'un substrat du disque de frein au moins partiellement recouverte d'un revêtement comprenant au moins une couche externe dure ledit témoin d'usure étant positionné sur ladite couche externe dure.

Dans un mode de réalisation, chacune des première et deuxième faces comporte une surface externe d'un substrat du disque de frein, la surface externe étant au moins partiellement recouverte d'un revêtement comprenant au moins une couche externe dure ledit témoin d'usure étant positionné sur ladite couche externe dure.

Avantageusement, la dureté de la couche externe dure est supérieure ou égale à 350 HB.

De préférence, la première portion s'étend radialement sur la zone de frottement par la plaquette de frein et la deuxième portion s'étend radialement sur la zone exempte de frottement par la plaquette de frein.

Dans un mode de réalisation, la largeur de l'évidement peut varier en fonction de la profondeur de l'évidement.

Selon un exemple, la section transversale de l'évidement peut être en forme de V.

Avantageusement, le disque de frein peut comprendre une pluralité de témoins d'usure, un ou plusieurs témoins d'usure étant disposé(s) sur la première face et/ou un ou plusieurs témoins d'usure étant disposé(s) sur la deuxième face.

Dans un mode de réalisation, et notamment en fonction de son procédé de fabrication, le revêtement peut en outre comprendre une couche intermédiaire disposée entre la couche externe et au moins l'une des surfaces externes de la première face et de la deuxième face.

Dans un mode de réalisation, le revêtement recouvrant au moins partiellement la surface externe de la première face comprend une couche intermédiaire disposée entre la couche externe et la surface externe de la première face, et le revêtement recouvrant au moins partiellement la surface externe de la deuxième face comprend également une couche intermédiaire disposée entre la couche externe et la surface externe de la deuxième face.

Dans un mode de réalisation, la couche intermédiaire peut comprendre un acier comportant une teneur en chrome comprise entre 10 et 20% en masse par rapport à la masse totale de l'acier, et la couche externe peut comprendre une matrice en acier comportant une teneur en chrome comprise entre 10 et 20% en masse par rapport à la masse totale de l'acier, et une teneur comprise entre 15 et 40% en volume d'au moins un carbure par rapport au volume total de la couche externe, le carbure étant choisi parmi les composés suivants : carbure de silicium, carbure de chrome, carbure de tungstène, carbure de niobium, carbure de titane ou un mélange de ceux-ci, de préférence choisi parmi le carbure de niobium, le carbure de titane ou un mélange de ceux-ci, le revêtement étant obtenu selon une technique de dépôt de matériaux par laser à très grande vitesse dite EHLA.

Avantageusement, la profondeur de l'évidement est inférieure ou égale à l'épaisseur de la couche externe.

L'invention se rapporte également à un véhicule automobile comprenant au moins un disque de frein comme décrit précédemment.

L'invention concerne aussi un procédé de fabrication d'un disque de frein comme décrit précédemment, l'évidement étant réalisé par une technique de gravure, telle qu'une technique de gravure laser.

D'autres buts, avantages et caractéristiques ressortiront de la description qui va suivre, donnée à titre purement illustratif et faite en référence aux dessins annexés sur lesquels :
[Fig 1] est une vue en coupe schématique d'un disque de frein pour véhicule automobile selon un mode de réalisation de l'invention.
[Fig 2] illustre une première face du disque de frein représenté à la figure 1.
[Fig 3] est une vue détaillée d'un revêtement recouvrant les première et deuxième surfaces externes d'un disque de frein selon un mode de réalisation de l'invention.
[Fig 4] est une section transversale d'un témoin d'usure passant par le plan IV-IV du disque de frein illustré à la figure 2.
[Fig 5] illustre le témoin d'usure illustré à la figure 2 dans un état usé.

Dans ce qui va suivre, et à moins d'une autre indication, les bornes d'un domaine de valeurs sont comprises dans ce domaine, notamment dans l'expression « compris(e) entre ».

Par ailleurs, l'expression « au moins un » utilisée dans la présente description est équivalente à l'expression « un ou plusieurs ».

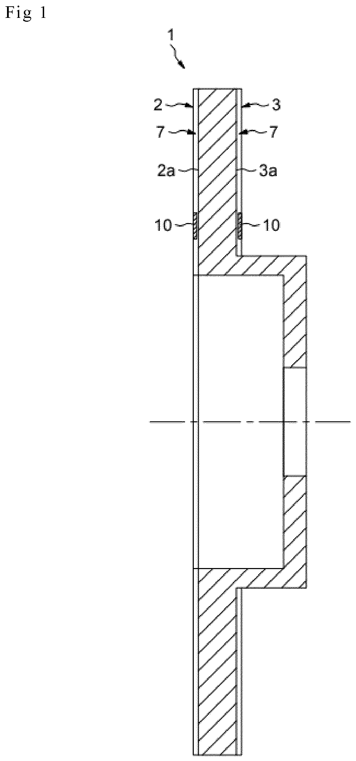

La figure 1 illustre un disque de frein 1 pour véhicule automobile.

Dans l'exemple illustré, le disque de frein 1 est une structure annulaire comprenant une première face 2 et une deuxième face 3 opposée à la première face 2.

Chacune des première et deuxième faces 2 et 3 comprend un substrat comportant une surface externe, respectivement 2a et 3a.

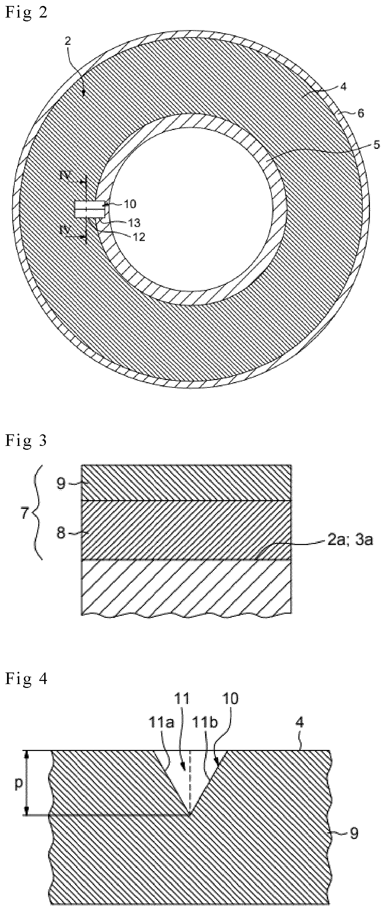

La première face 2 est illustrée sur la figure 2.

La première face 2 comprend une zone de frottement 4 formant une piste de friction, destinée à être en contact avec une plaquette de frein (non représentée).

De manière similaire, la deuxième face 3 comprend une zone de frottement 4 formant une piste de friction, destinée à être en contact avec une autre plaquette de frein.

Chaque zone de frottement 4 forme une zone de contact avec une plaquette de frein de sorte que le frottement des plaquettes de frein fixes sur les zones de frottement 4 mobiles du disque de frein 1 conduit au freinage du véhicule automobile.

Dans l'exemple illustré, chacune des première face 2 et deuxième face 3 comprend des première et deuxième zones exemptes de frottement, respectivement 5 et 6, par les plaquettes de frein.

Dans l'exemple illustré, les surfaces externes 2a et 3a du substrat de la première face 2 et de la deuxième face 3 du disque de frein 1 sont recouvertes, au moins partiellement, d'un revêtement 7.

Selon un exemple, le revêtement 7 peut être disposé au niveau des zones de frottement 4 et des zones exemptes de frottement 5 et 6 des première et deuxième faces 2, 3.

Dans l'exemple illustré, et en référence à la figure 3, le revêtement peut être une structure bicouche comprenant une couche intermédiaire 8 et une couche externe 9.

Dans l'exemple illustré, les zones de frottement 4 et les zones exemptes de frottement 5 et 6 des première et deuxième faces 2, 3 étant portées par la couche externe 9.

Sur la première face 2, la couche intermédiaire 8 est disposée entre la couche externe 9 et la première surface externe 2a du substrat de la première face 2.

Sur la deuxième face 3, la couche intermédiaire 8 est disposée entre la couche externe 9 et la deuxième surface externe 3a du substrat de la deuxième face 3.

Avantageusement, la couche externe 9 est une couche dure.

Par couche dure, on entend une couche dont la dureté est supérieure ou égale à 350 HB.

Le disque de frein 1 illustré comprend en outre deux témoins d'usure 10, chacun positionné sur l'une des première et deuxième faces 2, 3, et destinés à estimer l'usure du disque de frein 1.

Dans un mode de réalisation, le disque de frein 1 peut comprendre un nombre de témoins d'usure supérieur à deux.

Dans l'exemple illustré, chaque témoin d'usure 10 comprend un évidement 11 visible à l'œil nu.

De plus, le témoin est localisé à l'interface entre la zone de frottement 4 et l'une des zones exemptes de frottement 5, 6.

Dans l'exemple illustré, l'évidement 11 comprend une première portion 12 s'étendant sur la zone de frottement 4 de la plaquette de frein et une deuxième portion 13 qui prolonge la première portion 12 et s'étend sur la première zone exempte de frottement 5.

La localisation des témoins d'usure 10 à cheval entre la zone de frottement 4 de la plaquette de frein et la première zone exempte de frottement 5 permet d'estimer à l'œil nu et sans mesure l'état d'usure du disque de frein 1, au fur et à mesure de son usure par simple comparaison de la profondeur de l'évidement entre la zone de frottement 4 et la première zone exempte de frottement 5.

Pour faciliter la visualisation du témoin d'usure ainsi que la lecture de l'état d'usure, les première et deuxième portions 12 et 13 de l'évidement 11 s'étendent dans une direction radiale sur le disque de frein 1, la première portion 12 s'étendant radialement sur la zone de frottement 4 et la deuxième portion 13 s'étendant radialement sur la première zone exempte de frottement 5.

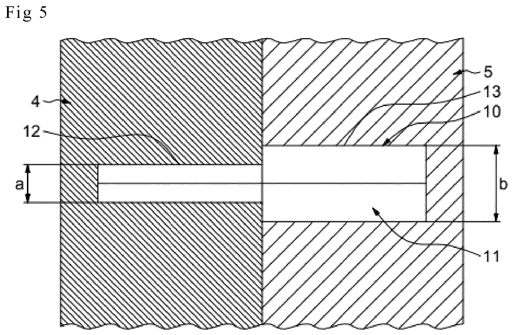

Avantageusement, et en référence aux figures 4 et 5, la largeur de l'évidement 11 peut varier en fonction de la profondeur de l'évidement 11, ce qui permet de faciliter l'estimation visuelle de l'état d'usure du témoin d'usure 10.

Plus la différence entre la largeur b de la première zone exempte de frottement 5 et la largeur a de la zone de frottement 4 est marquée, plus le disque de frein est usé. L'état d'usure peut être rapidement et aisément apprécié par une simple comparaison de la largeur a et b des première et deuxième portions 12 et 13 de l'évidement 11 du témoin d'usure 10.

Comme cela est représenté à la figure 4, la section transversale de l'évidement peut être en forme de V.

La fabrication d'un tel témoin d'usure 10 en forme de V est simple et rapide. Les deux parois frontales 11a et 11b opposées de l'évidement 11 sont inclinées par rapport à un plan perpendiculaire au plan général passant par le disque de frein 1, facilitant l'estimation de l'état d'usure du disque de frein 1 à l'œil nu. Plus la largeur a de l'évidement 11 de la première portion 12 localisée dans la première zone de frottement 4 est faible par rapport à la largeur b de l'évidement 11 de la deuxième portion 13 localisée dans la deuxième zone de frottement 5, plus l'état d'usure du disque de frein 1 est avancé.

La profondeur de l'évidement 11 est associée à l'état d'usure du disque de frein 1. Avantageusement la profondeur à l'état neuf de l'évidement 11 est telle que lorsque la profondeur p est atteinte par usure du disque de frein 1, et l'évidement 11 n'est plus visible sur la première portion 12 localisée sur la zone de frottement 4, celui-ci doit être remplacé.

Avantageusement, la profondeur de l'évidement 11 à l'état neuf peut être inférieure ou égale à l'épaisseur de la couche externe 9 du revêtement 7.

De préférence, la profondeur de l'évidement 11 à l'état neuf est inférieure à l'épaisseur de la couche externe 9. De cette façon, un avertissement sur l'état d'usure du disque de frein 1 peut être communiqué afin que le disque de frein 1 puisse être remplacé avant que la couche externe 9 du revêtement 7 soit entièrement retirée par usure thermomécanique.

Dans un mode de réalisation, le disque de frein 1 peut comprendre une pluralité de témoins d'usure 10 comportant des profondeurs p de l'évidement 11 à l'état neuf différentes. Ceci qui permet de fournir une indication progressive sur l'état d'usure du disque de frein 1 via plusieurs niveaux d'alerte.

Un premier témoin d'usure 10 peut par exemple comporter un évidement 11 de profondeur à l'état neuf du disque de frein 1 inférieure à la profondeur p d'un deuxième témoin d'usure 10.

Le premier témoin d'usure 10 transmet ainsi un premier avertissement sur la nécessité de remplacer prochainement le disque de frein 1. Le deuxième témoin d'usure 10 peut ensuite transmettre un deuxième avertissement sur la nécessité immédiate de remplacer le disque de frein 1.

Avantageusement, l'évidement 11 peut être obtenu par une technique de gravure, telle qu'une technique de gravure laser.

Dans l'exemple illustré, le disque de frein 1 comprend un premier témoin d'usure 10 sur la première face 2 et un témoin d'usure sur la deuxième face 3.

Avantageusement, le disque de frein 1 peut comprendre une pluralité de témoins d'usure 10.

Par exemple, le disque de frein 1 peut comprendre un témoin d'usure 10 sur la première face 2 et un témoin d'usure 10 sur la deuxième face 3, comme cela est illustré sur la figure 1.

Selon un autre exemple, le disque de frein 1 peut comprendre plusieurs témoins d'usure sur la première face 2 et plusieurs témoins d'usure 10 sur la deuxième face 3.

Selon un autre exemple, le disque de frein 1 peut comprendre un témoin d'usure sur la première face 2 et plusieurs témoins d'usure 10 sur la deuxième face 3, ou inversement.

Dans un mode de réalisation, le matériau du disque de frein 1 sur lequel le revêtement 7 est déposé peut être en fonte, de préférence en fonte à graphite lamellaire.

Avantageusement, l'acier de la couche intermédiaire 8 peut être un acier ferritique.

Par acier ferritique, on entend un acier dont la structure cristalline est cubique centrée et comportant une teneur en chrome comprise entre 10 et 20°% en masse par rapport à la masse totale de l'acier.

Les aciers ferritiques sont particulièrement avantageux compte tenu de leur faible tendance à la formation de fissures, notamment dues à leur faible coefficient de dilatation thermique, proche de celui de la fonte utilisée.

De préférence, l'acier ferritique de la couche intermédiaire 8 peut être un acier inoxydable ferritique constitué d'une teneur en chrome comprise entre 16 et 18 % en masse, une teneur en silicium inférieure ou égale à 1 % en masse, une teneur en nickel inférieure ou égale à 0,6 % en masse, une teneur en manganèse inférieure ou égale à 1 % en masse, une teneur en carbone inférieure ou égale à 0,08 % en masse, une teneur en molybdène inférieure ou égale à 1 % en masse, une teneur en phosphore inférieure ou égale à 0,045 % en masse, une teneur en soufre inférieure ou égale à 0,03 % en masse, une teneur en titane inférieure ou égale à 0,01 % en masse, optionnellement d'autres éléments d'addition tel que du cuivre, du vanadium, du niobium, ou encore de l'étain, le reste étant du fer ainsi que des impuretés inévitables. De préférence, la totalité des impuretés inévitables représente moins de 0,15 % en masse. De préférence, chaque impureté inévitable est présente à moins de 0,05 % en masse.

Selon un exemple, l'acier ferritique de la couche intermédiaire 8 peut être un acier inoxydable ferritique généralement connu sous la dénomination d'acier 430L ou sous sa désignation européenne X2Cr17, constitué d'une teneur en chrome de 16,29 % en masse, une teneur en silicium de 0,94 % en masse, une teneur en nickel de 0,53 % en masse, une teneur en manganèse de 0,28 % en masse, une teneur en carbone de 0,08 % en masse, une teneur en molybdène de 0,06 % en masse, une teneur en phosphore de 0,031 % en masse, une teneur en soufre de 0,02 % en masse, une teneur en titane de 0,003 % en masse, le reste étant du fer ainsi que des impuretés inévitables, les pourcentages étant définis par rapport à la masse totale de l'acier.

Avantageusement, la couche externe 9 comprend une matrice en acier comportant une teneur en chrome comprise entre 10 et 20% en masse par rapport à la masse totale de l'acier.

De préférence, l'acier de la matrice de la couche externe 9 et l'acier de la couche intermédiaire 8 sont identiques de façon à augmenter l'affinité et donc leur adhérence.

De manière à augmenter l'affinité et donc l'adhérence entre la couche intermédiaire 8 et la couche externe 9, l'acier de couche externe 9 est de préférence un acier ferritique.

De préférence, l'acier ferritique de la couche externe 9 est un acier inoxydable ferritique constitué d'une teneur en chrome comprise entre 16 et 18 % en masse, une teneur en silicium inférieure ou égale à 1 % en masse, une teneur en nickel inférieure ou égale à 0,6 % en masse, une teneur en manganèse inférieure ou égale à 1 % en masse, une teneur en carbone inférieure ou égale à 0,08 % en masse, une teneur en molybdène inférieure ou égale à 1 % en masse, une teneur en phosphore inférieure ou égale à 0,045 % en masse, une teneur en soufre inférieure ou égale à 0,03 % en masse, une teneur en titane inférieure ou égale à 0,01 % en masse, optionnellement d'autres éléments d'addition différents des éléments précités tel que du cuivre, du vanadium, du niobium, ou encore de l'étain, le reste étant du fer ainsi que des impuretés inévitables. De préférence, la totalité des impuretés inévitables représente moins de 0,15 % en masse. De préférence, chaque impureté inévitable est présente à moins de 0,05 % en masse.

Selon un exemple, l'acier ferritique de la couche externe 9 peut être un acier inoxydable ferritique généralement connu sous la dénomination d'acier 430L, constitué d'une teneur en chrome de 16,29 % en masse, une teneur en silicium de 0,94 % en masse, une teneur en nickel de 0,53 % en masse, une teneur en manganèse de 0,28 % en masse, une teneur en carbone de 0,08 % en masse, une teneur en molybdène de 0,06 % en masse, une teneur en phosphore de 0,031 % en masse, une teneur en soufre de 0,02 % en masse, une teneur en titane de 0,003 % en masse, le reste étant du fer ainsi que des impuretés inévitables, les pourcentages étant définis par rapport à la masse totale de l'acier.

De plus, la couche externe 9 comprend, de préférence, une teneur comprise entre 15 et 40% en volume d'au moins un carbure par rapport au volume total de la couche externe 9.

Le ou les carbure(s) sont choisis parmi les composés suivants : carbure de silicium, carbure de chrome, carbure de tungstène, carbure de niobium, carbure de titane ou un mélange de ceux-ci.

Dans un mode de réalisation, la couche externe 9 peut comprendre une teneur en carbure de titane comprise entre 15 et 25 % en volume, de préférence comprise entre 17 et 23 % en volume, de préférence encore comprise entre 19 et 21 % en volume, par rapport au volume total de la couche externe 9.

Selon un exemple, la couche externe 9 peut comprendre une teneur en carbure de titane égale à 20% en volume par rapport au volume total de la couche externe 9.

Dans un autre mode de réalisation, la couche externe 9 peut comprendre une teneur en carbure de niobium comprise entre 25 et 35 % en volume, de préférence comprise entre 27 et 33 % en volume, de préférence encore comprise entre 29 et 31 % en volume, par rapport au volume total de la couche externe 9.

Selon un exemple, la couche externe 9 peut comprendre une teneur en carbure de niobium égale à 30%.

Dans un autre mode de réalisation, la couche externe 9 peut comporter un mélange de carbures, la teneur de chaque carbure du mélange de carbures étant comprise entre 5 et 20% en volume, de préférence entre 5 et 10% en volume, par rapport au volume total de la couche externe 9.

En mélangeant plusieurs natures de carbures avec de plus faibles proportions, il est possible d'obtenir un revêtement 7 plus économique.

Selon un mode de réalisation, la couche externe 9 peut par exemple comporter un mélange de carbure de niobium et de carbure de titane, la teneur en carbure de niobium étant comprise entre 5 et 20 % en volume, de préférence comprise entre 5 et 10% en volume par rapport au volume totale de la couche externe 9, et une teneur en carbure de titane comprise entre 5 et 20 % en volume, de préférence comprise entre 5 et 10 % en volume par rapport au volume total de la couche externe 9.

Selon un exemple, la couche externe 9 peut comporter un mélange de carbure de niobium et de carbure de titane, la teneur en carbure de niobium étant de 5 % en volume et la teneur en carbure de titane étant de 10 % en volume, par rapport au volume total de la couche externe 9.

Le revêtement 7 est obtenu selon une technique de dépôt de matériaux par laser à très grande vitesse dite EHLA.

Par dépôt de matériaux par laser à très grande vitesse, on entend dans la présente invention une technique de projection thermique également connue sous la dénomination anglaise « Extreme high-speed laser application process » et sous l'acronyme EHLA.

La technique EHLA repose, comme la technique de Laser Cladding dont elle dérive, sur l'utilisation d'un laser industriel haute puissance pour faire fondre et/ou souder des poudres métalliques. Les poudres entraînées par un gaz, tel que de l'argon, forment un flux de poudre projeté sur un substrat, créant ainsi une superposition de liaisons métallurgiques. Ce procédé permet la création d'une zone thermiquement affectée avec le substrat garantissant une bonne adhérence au substrat, tel que les première et deuxième surfaces externes 2a, 3a.

La technique de dépôt laser EHLA permet d'atteindre une vitesse de dépôt jusqu'à 200 m/min et un taux de surface jusqu'à 500 cm²/min, soit 100 fois plus vite que dans la technique de Laser Cladding conventionnelle. En effet, certains paramètres comme la puissance laser ou le débit de poudre sont plus élevés.

Contrairement à la technique de Laser Cladding conventionnelle, dans la technique EHLA, les particules sont fondues avant d'entrer en contact avec le substrat, à environ 1 mm du substrat. L'ensemble du flux de poudre converge vers un point à distance du substrat. Les particules présentes dans le flux de poudre ainsi fondues sont ensuite transportées par le gaz et tombe dans le bassin de fusion. Le substrat étant déjà lui aussi chauffé par le laser, la zone thermiquement affectée, qui correspond à une zone de fusion entre une partie de la poudre projetée et une partie du substrat, est plus fine que dans le procédé Laser Cladding, et l'énergie absorbée par le substrat est moindre.

La très fine, voire inexistante, zone thermiquement affectée obtenue via la technique EHLA permet, lors de la formation du revêtement 7, de ne pas déformer le matériau du disque de frein 1, tel que la fonte, sur lequel est formé le revêtement 7, et de ne pas modifier ses propriétés, notamment ses propriétés de résistance à la déformation.

Un tel revêtement 7 obtenu par la technique EHLA possède des propriétés de résistance mécanique optimisées, notamment face aux sollicitations thermomécaniques et à l'usure, ce qui permet de limiter l'émission de particules polluantes par le disque de frein 1 lors du freinage ainsi qu'en dehors des phases de freinage du véhicule automobile.

La structure bicouche du revêtement 7 permet de limiter le nombre d'interfaces au niveau desquelles des porosités peuvent être présentes et être à l'origine de la décohésion du revêtement 7, le rendant fragile face aux sollicitations mécaniques. La structure bicouche permet donc d'obtenir un revêtement 7 plus résistant mécaniquement qu'une structure comportant un nombre supérieur à deux interfaces.

Dans un mode de réalisation, les témoins d'usure 10 peuvent s'étendre dans la couche externe 9.

Dans un autre mode de réalisation, les témoins d'usure 10 peuvent s'étendre dans la couche externe 9 et au moins partiellement dans la couche intermédiaire 8.

On pourra prévoir qu'un tel disque de frein soit utilisé dans un véhicule de transport autre qu'un véhicule automobile, et soit notamment appliqué au domaine aéronautique ou ferroviaire.

## Revendications

1. Disque de frein comprenant une première face (2) et une deuxième (3) face opposée à la première face (2), chacune des première et deuxième faces (2, 3) comportant une zone de frottement (4) d'une plaquette de frein et au moins une zone exempte de frottement (5, 6) de la plaquette de frein,
**caractérisé en ce qu'**au moins l'une des première et deuxième faces (2, 3) comprend au moins un témoin d'usure (10) comprenant un évidement visible à l'œil nu et comportant une première portion (12) s'étendant sur la zone de frottement (4) et une deuxième portion (13) prolongeant la première portion (12) et s'étendant sur la zone exempte de frottement (5, 6).

2. Disque de frein selon la revendication 1, dans lequel chacune des première et deuxième faces (2, 3) comporte une surface externe (2a, 3a) d'un substrat au moins partiellement recouverte d'un revêtement (7) comprenant au moins une couche externe (9) dure, ledit témoin d'usure (10) étant positionné sur ladite couche externe (9) dure.

3. Disque de frein selon la revendication 2, dans lequel la dureté de la couche externe dure est supérieure ou égale à 350 HB.

4. Disque de frein selon la revendication 2 ou 3, dans lequel le revêtement (7) comprend en outre une couche intermédiaire (8) disposée entre la couche externe (9) et l'une des surfaces externes (2a, 3a) de la première face (2) et de la deuxième face (3).

5. Disque de frein selon la revendication 4, dans lequel la couche intermédiaire (8) comprend un acier comportant une teneur en chrome comprise entre 10 et 20% en masse par rapport à la masse totale de l'acier, et la couche externe (9) comprenant une matrice en acier comportant une teneur en chrome comprise entre 10 et 20% en masse par rapport à la masse totale de l'acier, et une teneur comprise entre 15 et 40% en volume d'au moins un carbure par rapport au volume total de la couche externe, le carbure étant choisi parmi les composés suivants : carbure de silicium, carbure de chrome, carbure de tungstène, carbure de niobium, carbure de titane ou un mélange de ceux-ci, de préférence choisi parmi le carbure de niobium, le carbure de titane ou un mélange de ceux-ci, le revêtement étant obtenu selon une technique de dépôt de matériaux par laser à très grande vitesse dite EHLA.

6. Disque de frein selon l'une quelconque des revendications 2 à 5, dans lequel la profondeur de l'évidement (11) est inférieure ou égale à l'épaisseur de la couche externe (9).

7. Disque de frein selon l'une quelconque des revendications précédentes, dans lequel la première portion (12) s'étend radialement sur la zone de frottement (4) de la plaquette de frein et la deuxième portion (13) s'étend radialement sur la zone exempte de frottement (5, 6) de la plaquette de frein.

8. Disque de frein selon l'une quelconque des revendications précédentes, dans lequel la largeur de l'évidement (11) varie en fonction de la profondeur de l'évidement (11).

9. Disque de frein selon la revendication 8, dans lequel la section transversale de l'évidement (11) est en forme de V.

10. Disque de frein selon l'une quelconque des revendications précédentes, comprenant une pluralité de témoins d'usure (10), un ou plusieurs témoins d'usure (10) étant disposé(s) sur la première face (2) et/ou un ou plusieurs témoins d'usure (10) étant disposé(s) sur la deuxième face (3).

11. Véhicule automobile comprenant au moins un disque de frein (1) selon l'une quelconque des revendications 1 à 10.

12. Procédé de fabrication d'un disque de frein selon l'une quelconque des revendications 1 à 10, dans lequel l'évidement (11) est réalisé par une technique de gravure, telle qu'une technique de gravure laser.
